# EUROPÄISCHE PATENTSCHRIFT

(11) **EP 3 513 500 B1**
(45) Veröffentlichungstag und Bekanntmachung des Hinweises auf die Patenterteilung: **30.12.2020**
(21) Anmeldenummer: 17780627.0
(22) Anmeldetag: 01.09.2017
(51) Int. Cl.: H04B 3/54, H04J 3/06

(54) **SYNCHRONISATION VON ÜBERTRAGUNGSKNOTEN**
SYNCHRONIZATION OF TRANSMISSION NODES
SYNCHRONISATION DE NOEUDS DE TRANSMISSION

(30) Priorität: 15.09.2016 DE 102016217683; 21.10.2016 AT 2572016
(43) Veröffentlichungstag der Anmeldung: 24.07.2019
(73) Patentinhaber: Tridonic GmbH & Co. KG, 6851 Dornbirn (AT)
(72) Erfinder: KLEBER, Norbert, 6850 Dornbirn (AT); ELTAHER, Amr, 38126 Braunschweig (DE)
(74) Vertreter: Banzer, Hans-Jörg
(86) Internationale Anmeldenummer: PCT/EP2017/071958
(87) Internationale Veröffentlichungsnummer: WO 2018/050454

(56) Entgegenhaltungen:
- EP-A1- 2 693 586
- US-A1- 2015 263 785
- LO BELLO L ET AL: "L-PTP: A novel clock synchronization protocol for Powerline networks", PROCEEDINGS OF 2012 IEEE 17TH INTERNATIONAL CONFERENCE ON EMERGING TECHNOLOGIES & FACTORY AUTOMATION (ETFA 2012) : KRAKOW, POLAND, 17 - 21 SEPTEMBER 2012, IEEE, PISCATAWAY, NJ, 17. September 2012 (2012-09-17), Seiten 1-4, XP032350313, DOI: 10.1109/ETFA.2012.6489774 ISBN: 978-1-4673-4735-8

## Beschreibung

### TECHNISCHES GEBIET

Verschiedene Ausführungsformen der Erfindung betreffen Techniken, um Übertragungsknoten, die über ein Übertragungsmedium kommunizieren, zu synchronisieren. Insbesondere verwenden verschiedene Ausführungsformen der Erfindung ein über das Übertragungsmedium kommuniziertes, kontinuierliches periodisches Synchronisationssignal.

### HINTERGRUND

In verschiedenen Anwendungsgebieten der Datenkommunikation kann es erstrebenswert sein, wenn Übertragungsknoten auf eine gemeinsame Zeitreferenz (engl. common time reference, CTR) zugreifen können. Um die gemeinsame Zeitreferenz bereitstellen zu können, werden Techniken der (Zeit-)Synchronisation angewendet.

Beispielhafte Anwendungsgebiete betreffen das Licht/Energie-Management und im Allgemeinen das Internet der Dinge (engl. Internet of Things, IOT). Beispielsweise kann die Entscheidungsfindung basierend auf kommunizierten Nutzdaten davon abhängig sein, dass der Zeitpunkt des Sendens einer die Nutzdaten beinhaltenden Nachricht mit guter Genauigkeit bekannt ist. In anderen Beispielen kann auch der Zugriff auf das Übertragungsmedium (engl. medium access) durch sog. Zeitmultiplex (engl. time division multiplexing, TDM) Techniken reguliert sein: Um Kollisionen zu vermeiden kann eine gemeinsame Zeitreferenz erstrebenswert sein.

In Referenzimplementierungen verfügen Übertragungsknoten typischerweise über Zeitgeber. Beispielsweise können die Zeitgeber mittels eines Schwingquarz, etc. implementiert werden. Basierend auf einer Ausgabe der Zeitgeber ist es dann möglich, einen Zeitstempel zu bestimmen und zum Beispiel zusammen mit einer Nutzdaten beinhaltenden Nachricht zu übertragen.

In weiteren Referenzimplementierungen verfügen Übertragungsknoten über einen GPS-Empfänger. Dann ist es möglich, Steuersignale von Satelliten zu empfangen, die indikativ für eine gemeinsame Zeitreferenz sind. Es ist dann möglich, basierend auf der Zeitreferenz einen Zeitstempel zu bestimmen und zum Beispiel zusammen mit einer Nutzdaten beinhaltenden Nachricht zu übertragen.

Jedoch weisen solche vorbekannten Referenzimplementierungen bestimmte Einschränkungen und Nachteile auf. Zum Beispiel ist es möglich, dass die verschiedenen Zeitgeber unterschiedlicher Übertragungsknoten einen Drift aufweisen. Dann kann die Genauigkeit der gemeinsamen Zeitreferenz im Verlauf der Zeit abnehmen. Typischerweise weist der Drift Zufallskomponenten auf und nimmt mit zunehmender Betriebsdauer des jeweiligen Zeitgebers zu. Deshalb ist typischerweise die Genauigkeit der gemeinsamen Zeitreferenz basieren auf solchen Zeitgebern beschränkt, beispielsweise auf eine Genauigkeit von ein oder mehreren Mikrosekunden. Das Bereitstellen einer höheren Genauigkeit bedingt oftmals komplizierte Hardware-Implementierungen der Zeitgeber. Eine höhere Genauigkeit kann deshalb die Systemkosten erhöhen. GPS-Empfänger weisen oftmals eine hohe Komplexität und hohe Systemkosten auf. Außerdem kann die Verfügbarkeit von Steuersignalen, die von Satelliten gesendet werden, begrenzt sein. Insbesondere im Zusammenhang mit Anwendungsfällen im Innenraum kann eine derartige Synchronisation nicht oder nur beschränkt umsetzbar sein.

Die Dokumente EP 2 693 586 A1 und US 2015/263785 A1 offenbaren jeweils Übertragungsknoten nach dem Oberbegriff des unabhängigen Patentanspruchs 1.

### ZUSAMMENFASSUNG

Es besteht ein Bedarf für verbesserte Techniken zur Synchronisation verschiedener Übertragungsknoten, die über ein Übertragungsmedium kommunizieren. Insbesondere besteht ein Bedarf für Techniken, die zumindest einige der oben genannten Einschränkungen und Nachteile beheben oder lindern.

Diese Aufgabe wird von den Merkmalen der unabhängigen Patentansprüche gelöst. Die Merkmale der abhängigen Patentansprüche definieren Ausführungsformen.

Die Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung, wie er durch die Ansprüche definiert ist, zu verlassen.

### KURZE BESCHREIBUNG DER FIGUREN

FIG. 1 illustriert schematisch ein System mit einem nicht zu der Erfindung gehörenden Zeitgeberknoten und mehreren Übertragungsknoten gemäß verschiedenen Ausführungsformen, die über ein Übertragungsmedium kommunizieren.
FIG. 2 ist ein Signalflussdiagramm und illustriert schematisch Laufzeiten von Signalen auf dem Übertragungsmedium gemäß verschiedener Ausführungsformen.
FIG. 3 illustriert schematisch ein Synchronisationssignal und das Ermitteln mehrerer Signalwerte des Synchronisationssignals gemäß verschiedener Ausführungsformen.
FIG. 4 illustriert schematisch eine Nachschlagetabelle zum Bestimmen eines Zeitstempels basierend auf den Signalwerten des Synchronisationssignals gemäß verschiedener Ausführungsformen.
FIG. 5 illustriert schematisch eine Nachricht gemäß verschiedener Ausführungsformen, die über das Übertragungsmedium kommuniziert werden kann und die indikativ für die mehreren Signalwerte des Synchronisationssignals sein kann.
FIG. 6 illustriert schematisch einen Übertragungsprotokollstapel zum Kommunizieren der Nachricht gemäß verschiedener Ausführungsformen.
FIG. 7 ist ein Signalflussdiagramm und illustriert das Kommunizieren der Nachricht gemäß verschiedener Ausführungsformen.
FIG. 8 ist ein Signalflussdiagramm und illustriert das Kommunizieren der Nachricht gemäß verschiedener Ausführungsformen.
FIG. 9 ist ein Signalflussdiagramm und illustriert schematisch das Konfigurieren einer gemeinsamen Zeitreferenz gemäß verschiedener Ausführungsformen.
FIG. 10 illustriert schematisch den Zeitgeberknoten.
FIG. 11 illustriert schematisch einen Übertragungsknoten gemäß verschiedener Ausführungsformen.
FIG. 12 illustriert schematisch einen Übertragungsknoten gemäß verschiedener Ausführungsformen.
FIG. 13 ist ein Flussdiagramm eines nicht zu der Erfindung gehörenden Verfahrens.
FIG. 14 ist ein Flussdiagramm eines Verfahrens gemäß verschiedener Ausführungsformen.
FIG. 15 ist ein Flussdiagramm eines nicht zu der Erfindung gehörenden Verfahrens.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken in Bezug auf die Synchronisation von Übertragungsknoten, die über ein Übertragungsmedium kommunizieren, beschrieben. In anderen Worten werden nachfolgend Techniken beschrieben, die es ermöglichen, den Übertragungsknoten eine gemeinsame Zeitreferenz bereitzustellen.

In verschiedenen Beispielen wäre es möglich, dass derart Zeitstempel bestimmt werden können, die beispielsweise mit kommunizierten Nutzdaten assoziiert sind. Beispielsweise wäre es möglich, dass der Zeitstempel indikativ für einen Zeitpunkt des Sendens einer die Nutzdaten beinhaltenden Nachricht ist. Alternativ oder zusätzlich wäre es auch möglich, dass der Zeitstempel indikativ für einen mit dem Informationsgehalt der Nutzdaten assoziierten Zeitpunkt ist: beispielsweise könnten die Nutzdaten Sensor-Messungen beinhalten und der Zeitstempel könnte indikativ für einen Zeitpunkt der Messung sein. Der Zeitstempel könnte dabei in unterschiedlichen Zeit-Referenzsystemen erzeugt werden. Beispielsweise könnte der Zeitstempel in einem globalen Zeit-Referenzsystem wie beispielsweise Coordinated Universal Time (UTC) erzeugt werden. Der Zeitstempel könnte auch in einem lokalen Zeit-Referenzsystem erzeugt werden, welches spezifisch für das Übertragungsmedium ist.

In manchen Beispielen wird ein System umfassend mehrere Übertragungsknoten und das Übertragungsmedium beschrieben. Beispielsweise könnte ein solches System ein Kommunikationsnetzwerk ausbilden. Beispiele für Kommunikationsnetzwerke umfassen etwa drahtlose Netzwerke, drahtgebunde Netzwerke, Mobilfunk-Netzerwerke, Powerline-Kommunikationsnetzwerke (engl. power line communication, PLC), etc. In manchen Beispielen wäre es möglich, dass eine Hierarchie zwischen den verschiedenen Übertragungsknoten implementiert wird. Beispielsweise könnte das Kommunikationsnetzwerk ein Steuergerät aufweisen, welches mit mehreren Endgeräten kommuniziert. Zum Beispiel könnte das Steuergerät Steuerbefehle als Nutzdaten an die Endgeräte senden. Zum Beispiel könnten die Endgeräte Statusinformation als Nutzdaten an das Steuergerät senden. Die Statusinformation könnte beispielsweise Sensor-Messungen oder einen Betriebszustand des Endgeräts indizieren.

Grundsätzlich sind die hierin beschriebenen Techniken in unterschiedlichsten Anwendungsgebieten anwendbar. Beispiele umfassen die Kommunikation zwischen Lampen und einem Licht-Steuergerät. Weitere Beispiele umfassen die Kommunikation zwischen einem Steuergerät für intelligentes Wohnen (engl. smart home bzw. connected home) und entsprechenden Aktoren und/oder Sensoren, etwa Licht-Sensoren, Rauch-Sensoren, Bewegungs-Sensoren, Temperatur-Sensoren, etc.. Aus Gründen der Einfachheit wird nachfolgend insbesondere Bezug genommen auf beispielhafte Implementierungen, bei denen die Kommunikation zwischen Lampen und einem Licht-Steuergerät erfolgt. Jedoch sind die im Zusammenhang mit solchen beispielhaften Implementierungen beschriebenen Techniken nicht beschränkt auf die Kommunikation zwischen Lampen und dem Licht-Steuergerät. Entsprechende Techniken können auch in anderen Anwendungsgebieten eingesetzt werden.

In verschiedenen Beispielen wird ein Synchronisationssignal über das Übertragungsmedium kommuniziert. Beispielsweise kann ein Zeitgeberknoten eingerichtet sein, um das Synchronisationssignal zu senden. Das Synchronisationssignal kann periodisch sein. Beispielsweise könnte das Synchronisationssignal durch eine Sinus-Funktion oder eine Cosinus-Funktion beschrieben werden. In manchen Beispielen wird das Synchronisationssignal kontinuierlich gesendet. Dies kann bedeuten, dass das Synchronisationssignal durchgängig über viele Periodendauern des Synchronisationssignals gesendet wird. Insbesondere kann dies bedeuten, dass das Synchronisationssignal durchgängig während des bestimmungsgemäßen Betriebs eines entsprechenden Kommunikationsnetzwerks übertragen wird.

In verschiedenen Beispielen kann das Kommunizieren einer Nachricht über das Übertragungsmedium mit einer Phasenlage in Bezug auf das Synchronisationssignal assoziiert werden. Die Phasenlage kann dann indikativ für den Zeitpunkt des Sendens der Nachricht sein. In manchen Beispielen wäre es möglich, dass die Phasenlage basierend auf mindestens zwei zeitbeabstandeten Signalwerten des Synchronisationssignals bestimmt wird.

In manchen Beispielen könnte der Zugriff auf das Übertragungsmedium basierend auf einer aus dem Synchronisationssignal abgeleiteten Zeitreferenz reglementiert werden.

Optional wäre es in manchen Beispielen auch möglich, dass Laufzeiten von Signalen über das Übertragungsmedium bei der Synchronisation berücksichtigt werden. In diesem Zusammenhang wäre es zum Beispiel möglich, dass die Laufzeit des Synchronisationssignals von dem Zeitgeber zu dem die Nachricht sendenden Übertragungsknoten berücksichtigt wird. Beispielsweise könnte die Laufzeit der Signale in einer Referenz-Messung bestimmt werden. Zum Beispiel könnte die Referenz-Messung das Bestimmen einer Rundlaufzeit (engl. round trip time, RTT) von Signalen zwischen einem Zeitgeberknoten und dem jeweiligen Übertragungsknoten umfassen.

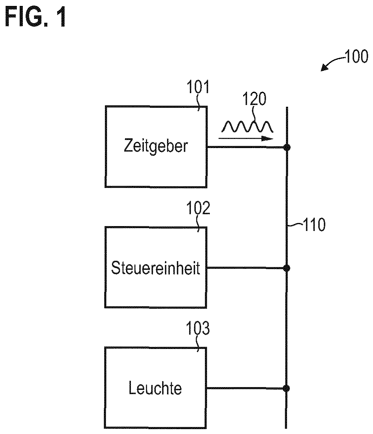

FIG. 1 illustriert Aspekte in Bezug auf ein System 100, welches einen Zeitgeberknoten 101, sowie Übertragungsknoten 102, 103 umfasst. Der Zeitgeberknoten 101 und die Übertragungsknoten 102, 103 können über ein Übertragungsmedium 110 miteinander kommunizieren. Insoweit implementiert das System 100 ein Kommunikationsnetzwerk.

In den verschiedenen hierin beschriebenen Beispielen ist es möglich, dass das Übertragungsmedium 110 drahtgebunden oder drahtlos implementiert wird. Beispielsweise könnte das Übertragungsmedium 110 ein Kupferkabel verwenden. Die Kommunikation über das Übertragungsmedium 110 kann dabei über einen auf dem Übertragungsmedium 110 implementierten Datenkanal erfolgen. Beispiele für Datenkanäle umfassen OFDM-basierte Datenkanäle; Paketdaten-orientierte Datenkanäle; Datenkanäle mit Übertragungsrahmen; TDMbasierte Datenkanäle, etc.

In dem Beispiel der FIG. 1 implementiert der Übertragungsknoten 102 eine Steuereinheit. Die Steuereinheit 102 kann Steuerbefehle an den Übertragungsknoten 103 senden, der durch eine Leuchte implementiert wird. Beispiele für Steuerbefehle umfassen z.B.: AN/AUS-Signal; Setzen des Dimmerlevels; Notstrombetrieb, etc.. Beispielsweise wäre es möglich, dass die Leuchte 103 ein Leuchtmittel wie zum Beispiel eine Leuchtdiode, eine Halogenlampe, eine Gasentladungslampe, etc. umfasst. Die Leuchte 103 kann wiederum Statusinformation an die Steuereinheit 102 senden. Die Statusinformation könnte z.B. einen Betriebszustand der Leuchte 103 indizieren, etc..

In dem Beispiel der FIG. 1 umfasst das Kommunikationsnetzwerk 100 lediglich die beiden Übertragungsknoten 102, 103. In anderen Beispielen wäre es möglich, dass das Kommunikationsnetzwerk 100 mehr als zwei Übertragungsknoten umfasst.

In dem Beispiel der FIG. 1 sendet der Zeitgeberknoten 101 ein kontinuierliches und periodisches Synchronisationssignal 120. Das Synchronisationssignal 120 wird über das Übertragungsmedium 110 verteilt. Das Synchronisationssignal 120 kann von den Übertragungsknoten 102, 103 empfangen werden. Das Synchronisationssignal 120 dient dem Bereitstellen einer gemeinsamen Zeitreferenz für die Übertragungsknoten 102, 103 und im Allgemeinen für alle mit dem Kommunikationsnetzwerk 100 verbundenen Übertragungsknoten 102, 103.

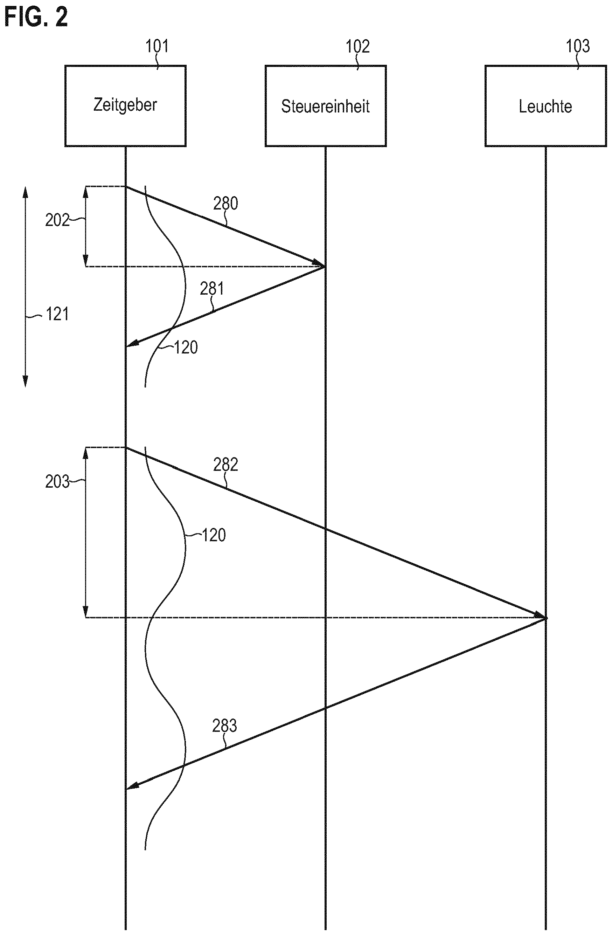

FIG. 2 illustriert Aspekte in Bezug auf das Kommunikationsnetzwerk 100. Insbesondere illustriert FIG. 2 Aspekte in Bezug auf eine Laufzeit 202, 203 von Signalen über das Übertragungsmedium 110. FIG. 2 ist ein Signalflussdiagramm.

In FIG. 2 ist ein Beispiel dargestellt, in welchem der Zeitgeberknoten 101 ein Signal 280 an die Steuereinheit 102 sendet. Beispielsweise könnte das Signal 280 ein Referenzsignal (engl. pilot signal) mit vorbekannter Signalform sein. Das Kommunizieren des Signals 280 benötigt eine gewisse Laufzeit 202. Die Laufzeit 202 entspricht der Zeitdauer zwischen Senden und Empfangen des Signals 280.

Zum Bestimmen der Laufzeit 202 wird die Rundlaufzeit zwischen dem Zeitgeberknoten 101 und der Steuereinheit 102 ermittelt. Dazu sendet die Steuereinheit 102 in Erwiderung auf das Empfangen des Signals 280 ein weiteres Signal 281 an den Zeitgeberknoten 101. Das Kommunizieren des weiteren Signals 281 benötigt in dem Beispiel der FIG. 2 auch die Laufzeit 202 (reziprokes Übertragungsmedium 110). Der Zeitgeberknoten 101 kann dann die Zeitdauer zwischen dem Senden des Signals 280 und dem Empfangen des Signals 281 (Rundlaufzeit) dazu verwenden, um die Signallaufzeit 202 zu bestimmen. Dies entspricht einer Referenz-Messung.

In FIG. 2 ist auch dargestellt, wie die Signallaufzeit 203 zwischen dem Zeitgeberknoten 101 und der Leuchte 103 bestimmt werden kann. Das Bestimmen der Signallaufzeit 203 kann basierenden auf den Signalen 282, 283 entsprechend dem Bestimmen der Signallaufzeit 202 durchgeführt werden.

Basierend auf den Signallaufzeiten 202, 203 jeweils zwischen dem Zeitgeberknoten 101 und der Steuereinheit 102 bzw. der Leuchte 103 kann durch Differenzbildung beispielsweise auch auf die Signallaufzeit zwischen der Steuereinheit 102 und der Leuchte 103 zurückgeschlossen werden.

In einem Beispiel wäre es möglich, dass der Zeitgeberknoten 101 eingerichtet ist, um die Laufzeiten 202, 203 zu ermitteln und beispielsweise anschließend abzuspeichern. Es wäre auch möglich, dass der Zeitgeberknoten 101 eingerichtet ist, um die Übertragungsknoten 102, 103 über die ermittelten Laufzeiten 202, 203 durch Übersenden einer entsprechenden Konfigurationsnachricht zu informieren (in FIG. 2 nicht dargestellt).

Beispielsweise könnte eine Referenz-Messung der Signallaufzeiten 202, 203 wiederholt mit einer bestimmten Wiederholrate durchgeführt werden. Die Referenz-Messung könnte z.B. eine als Funktion der Zeit veränderliche Position der Übertragungsknoten 102, 103 berücksichtigen.

FIG. 2 illustriert weiterhin Aspekte in Bezug auf das Synchronisationssignal 120. Aus dem Beispiel der FIG. 2 ist ersichtlich, dass die Signallaufzeiten 202, 203 kürzer sind als die Periodendauern 121 des Synchronisationssignals 120. Beispielsweise kann dies durch geeignete Dimensionierung der Frequenz des Synchronisationssignal 120 erreicht werden. In manchen Beispielen weiß das Synchronisationssignal 120 eine Frequenz auf, die nicht größer als 1 MHz ist, optional nicht größer als 500 kHz, weiter optional nicht größer als 1 kHz. Beispielsweise könnte der Zeitgeberknoten 101 eingerichtet sein, um die Frequenz des Synchronisationssignals 120 basierend auf den Signallaufzeiten 202, 203 zu bestimmen. Im Allgemeinen könnte die Frequenz des Synchronisationssignals 120 so dimensioniert sein, dass die Laufzeiten 202, 23 nicht größer als die dreifache Periodendauer 121 des Synchronisationssignals 120 sind, optional nicht größer als die Periodendauer 121, weiter optional nicht größer als die halbe Periodendauer 121. Durch eine entsprechende Dimensionierung der Frequenz bzw. Periodendauer 121 des Synchronisationssignals 120, so dass die Signallaufzeiten 202, 203 kürzer sind als die Periodendauern 121 des Synchronisationssignals 120, kann erreicht werden, dass Zweideutigkeiten bei der Ermittlung der gemeinsamen Zeitreferenz vermieden werden können. Insbesondere kann vermieden werden, dass aufgrund langer Signallaufzeiten 202, 203 nicht mehr zugeordnet werden kann, in welcher Periode des Synchronisationssignals 120 eine bestimmte Nachricht gesendet wurde.

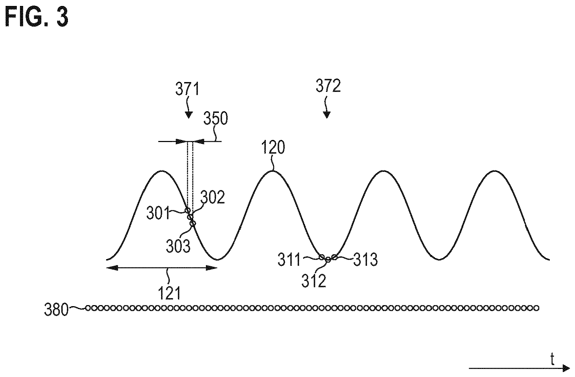

FIG. 3 illustriert Aspekte in Bezug auf das Ermitteln von zeitbeabstandeten Signalwerten 301-303, 311-313 des Synchronisationssignals 120. In FIG. 3 ist der Signalverlauf des Synchronisationssignals 120 als Funktion der Zeit dargestellt.

Aus FIG. 3 ist ersichtlich, dass das Synchronisationssignal 120 periodisch ist und kontinuierlich - das heißt für viele Periodendauern 121 über das Übertragungsmedium 110 kommuniziert wird. In dem Beispiel der FIG. 3 ist das Synchronisationssignal 120 Sinus-förmig implementiert; es wären aber auch andere Funktions-Formen denkbar.

In verschiedenen Beispielen sind die Übertragungsknoten 102, 103 eingerichtet, um eine gemeinsame Zeitreferenz aus dem Synchronisationssignal 120 abzuleiten. Dazu können die Übertragungsknoten 102, 103 jeweils Signalwerte 301-303, 311-313 des Synchronisationssignals 120 zu einem bestimmten Zeitpunkt 371, 372 ermitteln. Aus den Signalwerten 301-303, 311-313 sind dann Zeitstempel ableitbar, die den bestimmten Zeitpunkt 371, 372 in der gemeinsamen Zeitreferenz identifizieren.

Durch das Verwenden einer Vielzahl von Signalwerten 301-302, 311-313 kann auf die aktuelle Phase des Synchronisationssignals 120 ohne Zweideutigkeiten zurückgeschlossen werden. In diesem Zusammenhang könnte beispielsweise insbesondere eine Änderung der verschiedenen Signalwerte berücksichtigt werden.

In dem Beispiel der FIG. 3 werden pro Zeitpunkt 371, 372 jeweils drei Signalwerte 301-303, 311-313 verwendet. In anderen Beispielen wäre es aber auch möglich, dass eine größere oder kleinere Anzahl von Signalwerten 301-303, 311-313 pro Zeitpunkt 371, 372 verwendet wird.

In FIG. 3 ist weiterhin eine Zeitdauer 350 dargestellt, über welche die Signalwerte 301-303 verteilt sind. Dies bedeutet, dass die Zeitdauer 350 der Zeitdauer zwischen dem ersten Signalwert 301 und dem letzten Signalwert 303 entspricht. In manchen Beispielen kann es möglich sein, dass die Auflösung der gemeinsamen Zeitreferenz umso größer ist, je kürzer die Zeitdauer 350 dimensioniert ist.

In dem Beispiel der FIG. 3 ist die Zeitdauer 350 signifikant kürzer als die Periodendauern 121 des Synchronisationssignals 120. Beispielsweise wäre es möglich, dass die Zeitdauer 350 nicht größer als 30 % der Periodendauern 121 ist, optional nicht größer als 10 %, weiter optional nicht größer als 4 %. Durch eine solche Technik können Zweideutigkeiten zwischen aufeinanderfolgenden Perioden des Synchronisationssignals 120 vermieden werden. Insbesondere ist es möglich, pro Periode des Synchronisationssignals 120 eine große Anzahl von Zeitpunkten 371, 372 durch geeignete Ermittlung der Signalwerte 301-303, 311-313 zu indizieren.

Beispielsweise wäre es möglich, dass die Übertragungsknoten 102, 103 das Synchronisationssignal 120 zum Ermitteln der Signalwerte 301-303, 311-313 mit einer vorgegebenen Abtastfrequenz abtasten. Dies kann in anderen Worten bedeuten, dass die Zeitabstände zwischen benachbarten Signalwerten 301-303, 311-313 fest und bekannt ist. In einem solchen Beispiel kann es möglich sein, einen entsprechenden Zeitstempel besonders einfach zu bestimmen, beispielsweise auf Grundlage einer vordefinierten Nachschlagetabelle.

Beispielsweise wäre es möglich, dass die Übertragungsknoten 102, 103 eine Logikschaltung umfassen, die eingerichtet ist, um eine zusammenhängende Serie 380 von Signalwerten mit der Abtastfrequenz abzutasten und dann diejenigen Signalwerte 301-303, 311-313, die indikativ für einen bestimmten Zeitpunkt 371, 372 sind, aus dieser Serie 380 auszuwählen. In anderen Worten wäre es möglich, dass eine kontinuierliche Abtastung des Synchronisationssignals 120 erfolgt. Mittels solcher Techniken ist es möglich, die Signalwerte 301-303, 311-313 besonders zügig und zeitnah in Bezug auf die entsprechenden Zeitpunkte 371, 372 zu ermitteln.

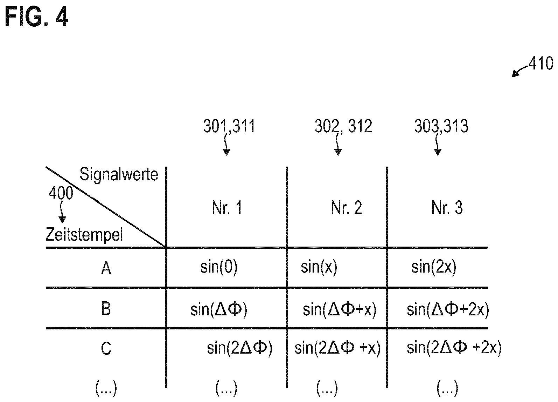

FIG. 4 illustriert Aspekte in Bezug auf den Zeitstempel 400. Insbesondere illustriert FIG. 4 Aspekte in Bezug auf das Ermitteln des Zeitstempels 400 basierend auf den Signalwerten 301-303, 311-313.

In FIG. 4 sind die zu drei verschiedenen Zeitstempeln 400 (in FIG. 4 mit A, B und C bezeichnet) zugeordneten Signalwerte 301-303, 311-313 in Tabellenform dargestellt. Insbesondere könnte die entsprechende Abhängigkeit zwischen den Zeitstempel 400 und den Signalwerten 301-303, 311-313 durch eine entsprechende Nachschlagetabelle 410 (engl. look-up table) abgebildet werden. Die Nachschlagetabelle 410 könnte z.B. in einem Speicher gespeichert werden. Basierend auf der Nachschlagetabelle 410 könnte dann der Zeitstempel 410 bestimmt werden. Dann könnte durch ein Vergleichen der gemessenen Signalwerte 301-303, 311-313 mit den Einträgen der Nachschlagetabelle 410 der jeweilige Zeitstempel 400 besonders effizient und wenig rechenintensiv bzw. zügig ermittelt werden.

Die Nachschlagetabelle 410 kann z.B. basierend auf der folgenden Gleichung konstruiert werden: $Δ Ø = 2 π \times f \times Δ t ,$ wobei Δ*t* die Auflösung der gemeinsamen Zeitreferenz ist und f die Frequenz des Synchronisationssignals 120 ist. Typischerweise kann eine Auflösung der Zeitreferenz umso größer sein, je mehr Einträge die Nachschlagetabelle 410 aufweist.

Aus FIG. 4 ist ersichtlich, dass die Abtastfrequenz der Signalwerte 301-303, 311-313 einen festen Wert *x* aufweist. Deshalb ist es besonders einfach möglich, die Nachschlagetabelle 410 zu verwenden: Die Nachschlagetabelle 410 kann dann mit der Abtastfrequenz korrespondiere Einträge aufweisen.

Anstatt einer Implementierung auf Grundlage der Nachschlagetabelle 410 wäre es auch möglich, den Zeitstempel 400 rechnerisch zu ermitteln. Dazu könnten Techniken der Kurven-Anpassung (engl. curve fitting) verwendet werden, wobei die Funktionsform des Synchronisationssignals 120 vorgegeben sein kann. Insbesondere in einem solchen Beispiel wäre es auch möglich, dass die Signalwerte 301-303, 311-313 nicht mit einer festen Abtastfrequenz ermittelt werden.

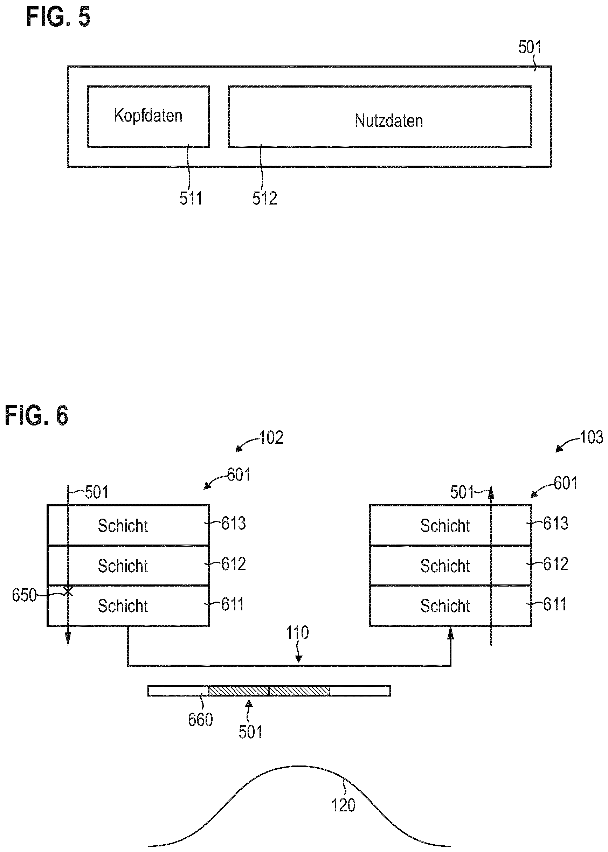

FIG. 5 illustriert Aspekte in Bezug auf eine Nachricht 501. Beispielsweise könnte die Nachricht 501 zwischen der Steuereinheit 102 und der Leuchte 103 über das Übertragungsmedium 110 kommuniziert werden, oder andersherum.

Die Nachricht 501 umfasst Kopfdaten 511, sowie Nutzdaten 512. Die Kopfdaten 511 können Steuerungsinformationen beinhalten. Die Steuerungsinformationen könnten z.B. eine Länge der Nachricht, eine Sequenznummer der Nachricht 501, eine Prüfsumme der Nachricht, Ursprung und Ziel der Nachricht, etc. beinhalten. Beispielsweise können die Kopfdaten 511 indikativ für die Signalwerte 301-303, 311-313 des Synchronisationssignals 120 sein. Derart kann mittels der Nachricht 501 ein Zeitpunkt 371, 372 indiziert werden, der wiederum mit den Nutzdaten 512 assoziiert ist. In einem Beispiel könnten die Signalwerte 301-303, 311-313 mit einem Zeitpunkt 371, 372 assoziiert sein, der dem Senden der Nachricht 501 entspricht. Mittels solcher Techniken kann also erreicht werden, dass die Nachricht 501 bzw. die Nutzdaten in Bezug zu einer gemeinsamen Zeitreferenz gesetzt werden.

FIG. 6 illustriert Aspekte in Bezug auf das Kommunizieren der Nachricht 501. Insbesondere illustriert FIG. 6 Aspekte in Bezug auf einen Übertragungsprotokollstapel 601 (engl. transmission protocol stack), der einen Datenkanal auf dem Übertragungsmedium 110 implementiert. Beispielsweise könnte der Übertragungsporotokollstapel 601 im OSI-Modell definiert sein, sh. ISO/IEC 7498-1 (1996-06-15).

In dem Beispiel der FIG. 6 sendet die Steuereinheit 102 die Nachricht 501 und die Leuchte 103 empfängt die Nachricht 501. In dem Beispiel der FIG. 6 implementiert sowohl die Steuereinheit 102, als auch die Leuchte 103 den Übertragungsprotokollstapel 601. Die Nachricht 501 durchläuft in der Steuereinheit 102 zunächst die verschiedenen Schichten 613-611 des Übertragungsprotokollstapels 601 und wird anschließend über das Übertragungsmedium 110 gesendet. Beispielsweise könnte die Schicht 611 als physikalische Schicht bezeichnet werden.

Der mit den Übertragungsprotokollstapeln 601 assoziierte Datenkanal verwendet Übertragungsrahmen 660. Beispielsweise können die Übertragungsrahmen 660 eine Anzahl von Zeit-Frequenz-Ressourcen auf dem Übertragungsmedium 110 umfassen. Die einzelnen Resources können z.B. Symbolen und/oder Sub-Trägern eines OFDM-Modulationsschemas entsprechen. Beispielsweise können die Übertragungsrahmen 660 eine wohldefinierte Länge, d.h. Dauer, aufweisen. Die Nachricht 501 kann durch die verschiedenen Schichten 611-613 auf ein oder mehrere Übertragungsrahmen 660 verteilt werden (in dem Beispiel der FIG. 6 sind diejenigen Übertragungsrahmen 660, welche die Nachricht 501 beinhalten, schraffiert gefüllt dargestellt). Ein solcher Prozess wird manchmal als Segmentierung bzw. Aggregation bezeichnet.

Beispielsweise kann der Datenkanal eine oder mehrere Trägerfrequenzen verwenden. Um Interferenzen zwischen dem Synchronisationssignal 120 und der einen oder den mehreren Trägerfrequenzen des Datenkanals zu vermeiden, wäre es möglich, dass die Frequenz des Synchronisationssignals 120 außerhalb einer Bandbreite des Datenkanals angeordnet ist. Insbesondere wäre es verschieden, dass Trägerfrequenz des entsprechenden Trägersignals bzw. die Trägerfrequenzen der entsprechenden Trägersignale des Datenkanals verschieden von der Frequenz des Synchronisationssignals sind. Mittels solcher Techniken kann eine Interferenz zwischen dem Synchronisationssignal 120 und dem Kommunizieren auf dem Datenkanal reduziert werden.

In dem Beispiel der FIG. 6 ist ein Punkt 650 des Übertragungsprotokollstapels 601 in der Steuereinheit 102 markiert. Wenn das Bearbeiten der Nachricht 501 an dem Punkt 650 erfolgt, kann das Ermitteln der zum entsprechenden Zeitpunkt 371, 372 zugehörigen Signalwerte 301-303, 311-313 erfolgen. Derart ist es möglich, dass die Nachricht 501 indikativ für Signalwerte 301-303, 311-313 ist, die den Zeitpunkt 371, 372 des Sendens der Nachricht 501 beschreiben. In dem Beispiel der FIG. 6 ist der Punkt 650 vergleichsweise tief in dem Übertragungsprotokollstapel 601 der Steuereinheit angeordnet. Dies bedeutet das ein Zeitversatz zwischen dem Bearbeiten der Nachricht 501 an dem Punkt 650 und dem endgültigen Senden der Nachricht 501 an der Unterkante der untersten Schicht 611 vergleichsweise klein ist. Dies bedeutet, dass die Nachricht 501 besonders genau indikativ für Signalwerte 301-303, 311-313 ist, die den Zeitpunkt 371, 372 des Sendens der Nachricht 501 beschreiben.

In dem Beispiel der FIG. 6 sind weiterhin Aspekte in Bezug auf das Synchronisationssignal 120 dargestellt. Insbesondere ist in dem Beispiel der FIG. 6 die Periodendauer 121 des Synchronisationssignals 120 signifikant länger als die Dauer eines Datenrahmens 660. Beispielsweise wäre es in verschiedenen Implementierungen möglich, dass die Dauer der Datenrahmen 660 nicht größer als 30 % der Periodendauer 121 ist, optional nicht größer als 10 %, weiter optional nicht größer als 4 %. Durch eine solche Dimensionierung der Periodendauer 121 ist es möglich, Zweideutigkeiten in Bezug auf den durch die Nachricht 501 auf Grundlage der Signalwerte 301-303, 311-313 indizierten Zeitpunkt 371, 372 zu vermeiden.

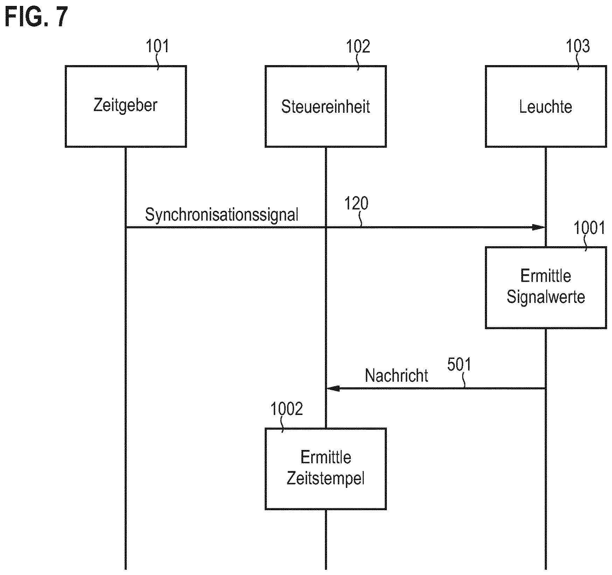

FIG. 7 illustriert Aspekte in Bezug auf das Kommunizieren der Nachricht 501. FIG. 7 ist ein Signalflussdiagramm. FIG. 7 illustriert die Kommunikation zwischen dem Zeitgeberknoten 101 und den Übertragungsknoten 102, 103.

Zunächst sendet der Zeitgeberknoten 101 das Synchronisationssignal 120. Das Synchronisationssignal 120 wird insbesondere von der Leuchte 103 empfangen. Das Synchronisationssignal 120 könnte durchgängig gesendet werden.

Basierend auf dem empfangenen Synchronisationssignal 120 ermittelt die Leuchte in Block 1001 mehrere Signalwerte 301-303, 311-313 des Synchronisationssignals 120. Dann sendet die Leuchte 103 die Nachricht 501 an die Steuereinheit 102. Die Nachricht 501 ist indikativ für die in Block 1001 ermittelten Signalwerte 301-303, 311-313. Beispielsweise wäre es möglich, dass die Signalwerte 301-303, 311-313 in digitaler Form in den Kopfdaten 511 der Nachricht 501 beinhaltet werden.

Anschließend ermittelt die Steuereinheit 102 basierend auf der Nachricht 501 den Zeitstempel 400, Block 1002. Dazu könnte die Steuereinheit 102 beispielsweise die Nachschlagetabelle 410 verwenden. Der Zeitstempel 400 kann beispielsweise indikativ für den Zeitpunkt des Sendens der Nachricht 501 sein. Alternativ oder zusätzlich könnte der Zeitstempel 400 indikativ für einen Zeitpunkt sein, der mit dem Informationsgehalt der Nutzdaten 512 der Nachricht 501 assoziiert ist

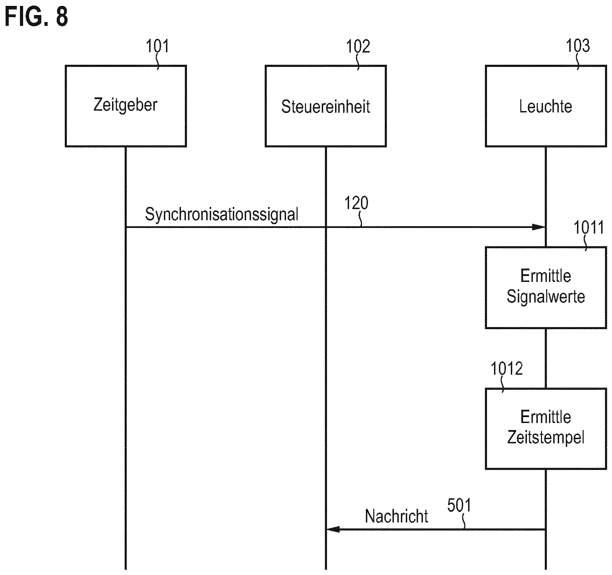

FIG. 8 illustriert Aspekte in Bezug auf das Kommunizieren der Nachricht 501. FIG. 8 ist ein Signalflussdiagramm. FIG. 8 illustriert die Kommunikation zwischen dem Zeitgeberknoten 101 und den Übertragungsknoten 102, 103.

Das Beispiel der FIG. 8 entspricht grundsätzlich dem Beispiel der FIG. 7. Jedoch ist in dem Beispiel der FIG. 8 die Logik in Bezug auf das Ermitteln des Zeitstempel 400 nicht in der Steuereinheit 102 angeordnet, sondern vielmehr in der Leuchte 103. Dazu ermittelt die Leuchte 103 basierend auf den in Block 1011 ermittelten Signalwerten 301-303, 311-313 den Zeitstempel 400, Block 1012. Dann wird die Nachricht 501 an die Steuereinheit 102 gesendet, wobei die Nachricht 501 den Zeitstempel 400 aus Block 1012 beinhalten kann. Die Nachricht 501 ist wiederum indikativ für die in Block 1011 ermittelten Signalwerte, weil der in Block 1012 ermittelte Zeitstempel 400 aus diesen Signalwerten 301-303, 311-313 abgeleitet wurde.

Beim Ermitteln des Zeitstempels 400 (vergleiche FIGs. 7 und 8, Blöcke 1002, 1012) könnte in den verschiedenen hierin beschriebenen Beispielen auch die Signallaufzeit 202, 203 des Synchronisationssignals 120 von dem Zeitgeberknoten 101 beispielsweise zu der Leuchte 103 berücksichtigt werden. Insbesondere kann derart die Verzögerung zwischen dem Zeitgeberknoten 101 und der Leuchte 103 aufgrund der Signallaufzeit des Synchronisationssignals 120 kompensiert werden.

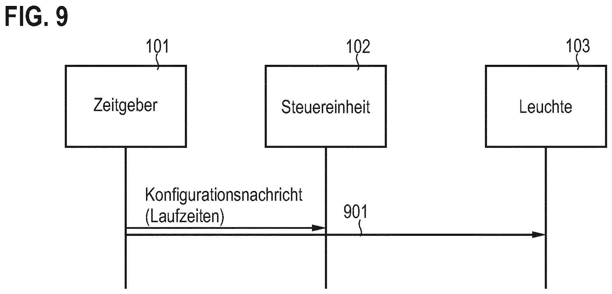

FIG. 9 illustriert Aspekte in Bezug auf das Konfigurieren der Übertragungsknoten 102, 103 in Bezug auf die gemeinsame Zeitreferenz. FIG. 9 ist ein Signalflussdiagramm. FIG. 9 illustriert die Kommunikation zwischen dem Zeitgeberknoten 101 und den Übertragungsknoten 102, 103.

In dem Beispiel der FIG. 9 sendet der Zeitgeberknoten 101 eine Konfigurationsnachricht 901 sowohl an die Steuereinheit 102, als auch an die Leuchte 103. Die Steuernachricht 901 ist indikativ für die Laufzeiten 202, 203 von Signalen zum Beispiel zwischen dem Zeitgeberknoten 101 und den Übertragungsknoten 102, 103. Dadurch kann es beim Ermitteln des Zeitstempel 400 möglich sein, einen Zeitversatz aufgrund der Übertragung des Synchronisationssignals 120 von dem Zeitgeberknoten 101 zu dem jeweiligen Übertragungsknoten 102, 103 zu kompensieren. Beispielsweise könnten die Übertragungsknoten 102, 103 eingerichtet sein, um die Laufzeiten 202, 203 in einem Speicher abzulegen.

Die Konfigurationsnachricht 901 könnte beispielsweise alternativ oder zusätzlich indikativ für die Frequenz des Synchronisationssignals 120 sein. Das Kommunizieren der Frequenz des Synchronisationssignals 120 kann eine dynamische Dimensionierung der Frequenz durch den Zeitgeberknoten 101, beispielsweise in Abhängigkeit der ermittelten Laufzeiten 202, 203, ermöglichen.

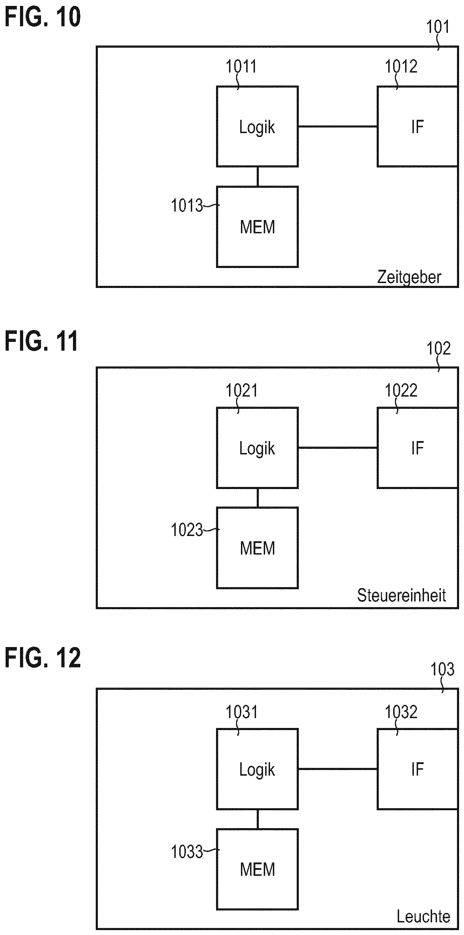

FIG. 10 illustriert Aspekte in Bezug auf den Zeitgeberknoten 101. Der Zeitgeberknoten 101 umfasst eine Logikschaltungen 1011. Beispielsweise könnte die Logikschaltung 1011 Analog-Komponenten und/oder Digital-Komponenten umfassen. Beispielsweise könnte die Logikschaltung 1011 durch einen Mikroprozessor, einen Applikations-spezifischen integrierten Schaltkreis (ASIC), einen Prozessor (CPU), etc. implementiert sein. Die Logikschaltung 1011 kann eingerichtet sein, um verschiedene Techniken in Bezug auf das Bereitstellen einer gemeinsamen Zeitreferenz wie hierin beschrieben zu implementieren. Beispielsweise könnte die Logikschaltung 1011 eingerichtet sein, um das periodische Synchronisationssignal kontinuierlich zu senden. Zur Kommunikation über das Übertragungsmedium 110 umfasst der Zeitgeberknoten 101 eine Schnittstelle 1012. Außerdem umfasst der Zeitgeberknoten 101 einen Speicher 1013. Beispielsweise könnte der Speicher 1013 Steueranweisungen speichern, die von der Logikschaltung 1011 ausgeführt werden können. Beispielsweise könnte der Speicher 1013 Laufzeiten 202, 203 von Signalen über das Übertragungsmedium 110 speichern.

FIG. 11 illustriert Aspekte in Bezug auf die Steuereinheit 102. Die Steuereinheit 102 umfasst eine Logikschaltung 1021. Beispielsweise könnte die Logikschaltung 1021 Analog-Komponenten und/oder Digital-Komponenten umfassen. Beispielsweise könnte die Logikschaltung 1021 durch einen Mikroprozessor, einen ASIC, einen CPU, etc. implementiert sein. Die Logikschaltung 1021 kann eingerichtet sein, um verschiedene Techniken in Bezug auf das Bereitstellen einer gemeinsamen Zeitreferenz wie hierin beschrieben zu implementieren. Beispielsweise könnte die Logikschaltung 1021 eingerichtet sein, um das Synchronisationssignal 120 zu empfangen. Die Logikschaltung 1021 könnte eingerichtet sein, um Signalwerte 301-303, 311-313 des Synchronisationssignals 120 zu ermitteln. Die Logikschaltung 1021 könnte eingerichtet sein, um einen Zeitstempel 400 basierend auf den Signalwerten 301-303, 311-313 zu ermitteln. Die Logikschaltung 1021 könnte eingerichtet sein, um eine Nachricht 501 zu senden, die indikativ für die Signalwerte 301-303, 311-313 ist. Zur Kommunikation über das Übertragungsmedium 110 umfasst die Steuereinheit 102 eine Schnittstelle 1022. Außerdem umfasst die Steuereinheit 102 einen Speicher 1023. Beispielweise könnte der Speicher 1023 Steueranweisungen speichern, die von der Logikschaltung 1021 ausgeführt werden können. Beispielsweise könnte der Speicher 1023 Laufzeiten 202, 203 von Signalen über das Übertragungsmedium 110 speichern.

FIG. 12 illustriert Aspekte in Bezug auf die Leuchte 103. Die Leuchte 103 umfasst eine Logikschaltung 1031. Beispielsweise könnte die Logikschaltung 1031 Analog-Komponenten und/oder Digital-Komponenten umfassen. Beispielsweise könnte die Logikschaltung 1031 durch einen Mikroprozessor, einen ASIC, einen CPU, etc. implementiert sein. Die Logikschaltung 1031 kann eingerichtet sein, um verschiedene Techniken in Bezug auf das Bereitstellen einer gemeinsamen Zeitreferenz wie hierin beschrieben zu implementieren. Beispielsweise könnte die Logikschaltung 1031 eingerichtet sein, um das Synchronisationssignal 120 zu empfangen. Die Logikschaltung 1031 könnte eingerichtet sein, um Signalwerte 301-303, 311-213 des Synchronisationssignals 120 zu ermitteln. Die Logikschaltung 1031 könnte eingerichtet sein, um einen Zeitstempel 400 basierend auf den Signalwerten 301-303, 311-313 zu ermitteln. Die Logikschaltung 1031 könnte eingerichtet sein, um eine Nachricht 501 zu senden, die indikativ für die Signalwerte 301-303, 311-313 ist. Zur Kommunikation über das Übertragungsmedium 110 umfasst die Leuchte 103 eine Schnittstelle 1032. Außerdem umfasst die Leuchte 103 einen Speicher 1033. Beispielsweise könnte der Speicher 1033 Steueranweisungen speichern, die von der Logikschaltung 1031 ausgeführt werden können. Beispielsweise könnte der Speicher 1033 Laufzeiten 202, 203 von Signalen über das Übertragungsmedium speichern.

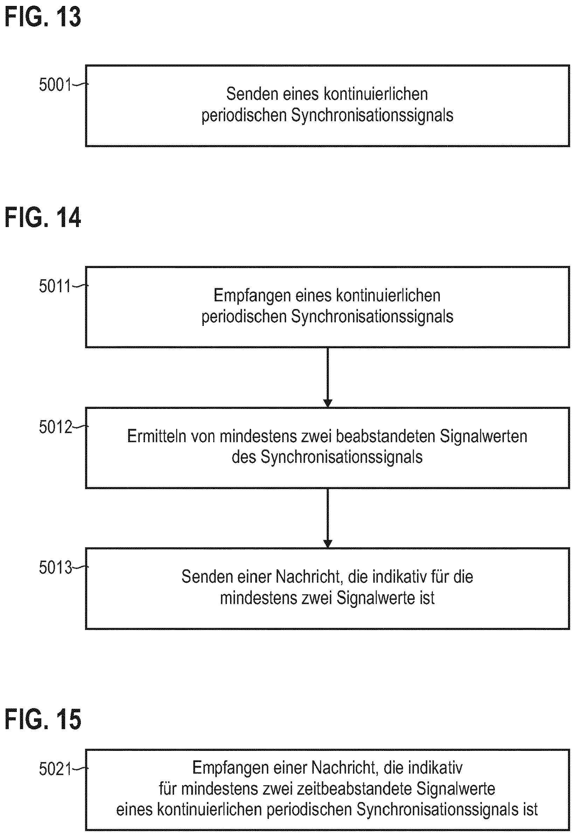

FIG. 13 illustriert ein Verfahren gemäß verschiedener Beispiele. FIG. 13 ist ein Flussdiagramm. Beispielsweise könnte das Verfahren gemäß FIG. 13 durch den Zeitgeberknoten 101 ausgeführt werden.

In Block 5001 wird ein kontinuierliches, periodisches Synchronisationssignal über ein Übertragungsmedium gesendet. Beispielsweise könnten durchgängig bzw. ohne Unterbrechung mehr als zehn Perioden, optional mehr als 100 Perioden, weiter optional mehr als 1000 Perioden des Synchronisationssignals gesendet werden. Das Synchronisationssignal kann eine Frequenz aufweisen, die im Bereich von Kilohertz oder Megahertz liegt.

FIG. 14 illustriert ein Verfahren gemäß verschiedener Beispiele. FIG. 14 ist ein Flussdiagramm. Beispielsweise könnte das Verfahren gemäß FIG. 14 durch einen der Übertragungsknoten 102, 103 ausgeführt werden.

In Block 5011 wird ein kontinuierliches, periodisches Synchronisationssignal über ein Übertragungsmedium empfangen. Beispielsweise könnte in Block 5011 das in Block 5001 der FIG. 13 gesendete Synchronisationssignal empfangen werden.

In Block 5012 werden mindestens zwei zeitlich beabstandet Signalwerte des in Block 5011 empfangenen Synchronisationssignals ermittelt. Dazu ist es möglich, dass mittels eines Analog-Digital-Wandlers das empfangene Synchronisationssignal abgetastet wird, beispielsweise mit einer festen Abtastfrequenz und/oder durchgängig in einer Serie. Zum Beispiel können dann die Signalwerte aus einer Serie von abgetasteten signalwerten ausgewählt werden. Die Signalwerte können indikativ für eine Phasenlage des Synchronisationssignals sein und damit einen bestimmten Zeitpunkt beschreiben. Optional wäre es möglich, dass basierend auf den ermittelten Signalwerten ein Zeitstempel bestimmt wird.

In Block 5013 wird eine Nachricht gesendet. Die Nachricht wird über dasselbe Übertragungsmedium gesendet, auf dem in Block 5011 auch das Synchronisationssignal empfangen wurde. Die Nachricht kann zum Beispiel Kopfdaten und Nutzdaten umfassen. Die Nachricht ist indikativ für die mindestens zwei Signalwerte. Derart indiziert die Nachricht den Zeitpunkt, der der entsprechenden Phasenlage des Synchronisationssignals entspricht. Beispielsweise könnte die Nachricht die Signalwerte aus Block 5012 explizit indizieren und diese beispielsweise in den Kopfdaten beinhalten. Alternativ oder zusätzlich könnte die Nachricht die Signalwerte aus Block 5012 implizit indizieren und beispielsweise einen basierend auf den Signalwerten bestimmten Zeitstempel in den Kopfdaten beinhalten.

FIG. 15 illustriert ein Verfahren gemäß verschiedener Beispiele. FIG. 15 ist ein Flussdiagramm. Beispielsweise könnte das Verfahren gemäß FIG. 15 durch einen der Übertragungsknoten 102, 103 ausgeführt werden.

In Block 5021 wird eine Nachricht empfangen. Die Nachricht ist indikativ für mindestens zwei zeitbeabstandeten Signalwerte eines kontinuierlichen Synchronisationssignals. Beispielsweise könnten Block 5021 die in Block 5003 der FIG. 14 gesendete Nachricht empfangen werden.

Optional könnte anschließend basierend auf den Signalwerten aus Block 5021 ein Zeitstempel bestimmt werden.

Zusammenfassend wurden obenstehend Techniken beschrieben, mittels welchen eine gemeinsame Zeitreferenz bereitgestellt werden kann. Ein periodisches Synchronisationssignal - beispielsweise ein Sinus oder Kosinus - kann als gemeinsames Synchronisationssignal für alle Übertragungsknoten eines Kommunikationsnetzwerks verwendet werden, um eine gemeinsame Zeitreferenz zu erzeugen. Dieses periodische Synchronisationssignal kann dabei an alle mit dem Kommunikationsnetzwerk über ein Übertragungsmedium verbundenen Übertragungsknoten gesendet werden.

Ein bestimmter Übertragungsknoten sendet beispielsweise eine Nachricht zusammen mit einer bestimmten Anzahl von Signalwerten des Synchronisationssignals. Die Signalwerte können beispielsweise unter Verwendung eines Analog-Digital-Wandlers abgetastet werden. Ein anderer Übertragungsknoten sendet eine weitere Nachricht zusammen mit einer bestimmten Anzahl von anderen Signalwerten des Synchronisationssignals.

In manchen Beispielen kann eine Nachschlagetabelle verwendet werden. Basierend auf der Nachschlagetabelle kann dann ein Zeitstempel aus den Signalwerten abgeleitet werden. Dabei können die Signalwerte auf Übereinstimmung mit einem bestimmten Eintrag der Nachschlagetabelle überprüft werden.

Beispielsweise kann der Informationsgehalt, der mittels der verschiedenen Nachrichten kommuniziert wird, in aufsteigender oder absteigender Reihenfolge basierend auf den derart bestimmten Zeitstempel bzw. der gemeinsamen Zeitreferenz angeordnet werden.

Mittels der hierin beschriebenen Techniken kann eine hohe Auflösung für die gemeinsame Zeitreferenz erreicht werden. Beispielsweise kann eine Auflösung im Bereich 1 ns erreicht werden, wenn eine Frequenz des Synchronisationssignals von 100 kHz verwendet wird und eine Genauigkeit für die Signalwerte von 12 Bit. Eine solche Genauigkeit kann beispielsweise durch eine geeignete Dimensionierung des Analog-Digital-Wandlers, welcher die Abtastung des Synchronisationssignals implementiert, erreicht werden.

Mittels der hierin beschriebenen Techniken kann ein einzelner Zeitgeber in dem Zeitgeberknoten verwendet werden. Es ist insbesondere nicht erforderlich, dass die verschiedenen Übertragungsknoten über eigene Zeitgeber verfügen. Derart kann ein Drift zwischen verschiedenen Zeitgebern vermieden werden.

In manchen Beispielen ist es möglich, dass die entsprechenden Techniken Softwareimplementiert sind. Derart kann das Nachrüsten solcher Techniken zum Bereitstellen einer gemeinsamen Zeitreferenz vergleichsweise einfach durchgeführt werden.

Die hierin beschriebenen Techniken sind nicht auf Innenraum-Anwendungsgebiete beschränkt. Insbesondere im Vergleich zu GPS-basierten Techniken kann eine genaue Zeitreferenz auch in Innenraum-Anwendungsgebieten bereitgestellt werden.

Beispielsweise kann die Erfindung dazu genutzt werden, um einzelne Übertragungsknoten zu lokalisieren. Die Lage bzw. räumliche Anordnung der Übertragungsknoten kann bestimmt werden, da die Laufzeit zwischen Übertragungsknoten und die Geschwindigkeit der Synchronisationssignals im Übertragungsmedium bekannt sind bzw. ermittelt werden können. Auf diese Weise kann zum Beispiel im Falle eines Fehlers wie beispielsweise eines Kurzschlusses oder Ausfalls bestimmt werden, bei welchem Verbraucher wie beispielsweise ein Sensor, Betriebsgerät oder Leuchte der Fehler aufgetreten ist, indem die Lage bzw. räumliche Anordnung des entsprechenden Übertragungsknotens bestimmt wird.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise können in verschiedenen Implementierungen andere Übertragungsknoten als eine Steuereinheit und eine Leuchte implementiert werden. Beispielsweise können andere Signalformen für das Synchronisationssignal verwendet werden.

## Patentansprüche

1. Übertragungsknoten (102, 103), der umfasst:
- eine Schnittstelle (1022, 1023), die eingerichtet ist, um über ein Übertragungsmedium (110) zu kommunizieren, und
- mindestens eine Logikschaltung (1021, 1031), die eingerichtet ist, um ein kontinuierliches periodisches Synchronisationssignal (120) über die Schnittstelle (1022, 1023) zu empfangen und um mindestens zwei zeitbeabstandete Signalwerte (301-303, 311-313) des Synchronisationssignals (120) zu ermitteln,
wobei die mindestens eine Logikschaltung (1021, 1031) weiterhin eingerichtet ist, um eine Nachricht (501) über die Schnittstelle (1022, 1023) zu senden, wobei die Nachricht (501) indikativ für die mindestens zwei Signalwerte (301-303, 311-313) des Synchronisationssignals (120) ist,
**dadurch gekennzeichnet, dass** die mindestens eine Logikschaltung (1021, 1031) eingerichtet ist, um die Auswahl der mindestens zwei Signalwerte (301-303, 311-313) in Abhängigkeit des Bearbeitens der Nachricht (501) an einem vorbestimmten Punkt (650) eines Übertragungsprotokollstapels (601) der Schnittstelle (1022, 1023) auszulösen.

2. Übertragungsknoten (102, 103) nach Anspruch 1,
wobei die mindestens eine Logikschaltung (1021, 1031) eingerichtet ist, um die mindestens zwei Signalwerte (301-303, 311-313) durch Abtastung des Synchronisationssignals (120) mit einer vorgegebenen Abtastfrequenz zu ermitteln.

3. Übertragungsknoten (102, 103) nach Anspruch 2,
wobei die mindestens eine Logikschaltung (1021, 1031) eingerichtet ist, um eine zusammenhängende Serie (380) von Signalwerten (301-303, 311-313) des Synchronisationssignals (120) mit der Abtastfrequenz abzutasten und um die mindestens zwei Signalwerte (301-303, 311-313) durch Auswahl aus der Serie von Signalwerten (301-303, 311-313) zu ermitteln.

4. Übertragungsknoten (102, 103) nach einem der voranstehenden Ansprüche,
wobei die mindestens eine Logikschaltung (1021, 1031) eingerichtet ist, um einen mit dem Senden der Nachricht (501) assoziierten Zeitstempel (400) basierend auf den mindestens zwei Signalwerten (301-303, 311-313) zu bestimmen.

5. Übertragungsknoten (102, 103) nach Anspruch 4, der weiterhin umfasst:
- mindestens einen Speicher (1023, 1033), der eingerichtet ist, um vorbestimmte Laufzeiten (202, 203) von Signalen zwischen Übertragungsknoten (102, 103) des Übertragungsmediums (110) zu speichern,
wobei die mindestens eine Logikschaltung (1021, 1031) eingerichtet ist, um den Zeitstempel (400) weiterhin basierend auf den Laufzeiten (202, 203) zu bestimmen.

6. Übertragungsknoten (102, 103) nach Anspruch 5,
wobei die Laufzeiten (202, 203) nicht größer als die dreifache Periodendauer (121) des Synchronisationssignals (120) sind, optional nicht größer als die Periodendauer (121), weiter optional nicht größer als die halbe Periodendauer (121).

7. Übertragungsknoten (102, 103) nach einem der Ansprüche 4-6, der weiterhin umfasst:
- mindestens einen Speicher (1023, 1033), der eingerichtet ist, um eine Nachschlagetabelle (410) zwischen Signalwerten (301-303, 311-313) und Zeitstempeln (400) zu speichern,
wobei die mindestens eine Logikschaltung (1021, 1031) eingerichtet ist, um den Zeitstempel (400) weiterhin basierend auf der Nachschlagetabelle (410) zu bestimmen.

8. Übertragungsknoten (102, 103) nach einem der voranstehenden Ansprüche,
wobei eine Zeitdauer (350), über welche die mindestens zwei Signalwerte (301-303, 311-313) verteilt sind, nicht größer als 30 % einer Periodendauer (121) des Synchronisationssignals (120) ist, optional nicht größer als 10 %, weiter optional nicht größer als 4 %.

9. Übertragungsknoten (102, 103) nach einem der voranstehenden Ansprüche,
wobei das Synchronisationssignal (120) eine Frequenz aufweist, die nicht größer als 1 MHz ist, optional nicht größer als 500 kHz, weiter optional nicht größer als 1 kHz.

10. Übertragungsknoten (102, 103) nach einem der voranstehenden Ansprüche,
wobei die Schnittstelle (1022, 1023) eingerichtet ist, um die Nachricht (501) auf ein Trägersignal moduliert zu kommunizieren,
wobei eine Frequenz des Trägersignals verschieden ist von einer Frequenz des Synchronisationssignals (120).

11. Übertragungsknoten (102, 103) nach einem der voranstehenden Ansprüche,
wobei die Schnittstelle (1022, 1023) eingerichtet ist, um die Nachricht (501) in mindestens einem Datenrahmen (660) aus einer Serie von Datenrahmen (660) eines Datenkanals über das Übertragungsmedium (110) zu kommunizieren,
wobei eine Dauer der Datenrahmen (660) nicht größer als 30 % einer Periodendauer (121) des Synchronisationssignals (120) ist, optional nicht größer als 10 %, weiter optional nicht größer als 4 %.

12. Verfahren, das umfasst:
- Empfangen eines kontinuierlichen periodischen Synchronisationssignals (120) über ein Übertragungsmedium (110) über eine Schnittstelle (1022, 1023) eines Übertragungsknotens (102, 103),
- Ermitteln von mindestens zwei zeitbeabstandeten Signalwerten (301-303, 311-313) des Synchronisationssignals (120) durch eine Logikschaltung (1021, 1031) des Übertragungsknotens (102, 103), und
- Senden einer Nachricht (501) von dem Übertragungsknoten (102, 103) über die Schnittstelle (1022, 1023) und über das Übertragungsmedium (110), die indikativ für die mindestens zwei Signalwerte (301-303, 311-313) des Synchronisationssignals (120) ist, **gekennzeichnet durch**
- Auslösen einer Auswahl der mindestens zwei Signalwerte (301-303, 311-313) in Abhängigkeit des Bearbeitens der Nachricht (501) an einem vorbestimmten Punkt (650) eines Übertragungsprotokollstapels (601) der Schnittstelle (1022, 1023) durch die Logikschaltung (1021, 1031) des Übertragungsknotens (102, 103).

## Claims

1. Transmission node (102, 103) comprising:
- an interface (1022, 1023), which is configured to communicate via a transmission medium (110), and
- at least one logic circuit (1021, 1031) which is configured to receive a continuous periodic synchronization signal (120) via the interface (1022, 1023), and to determine at least two chronologically spaced signal values (301-303, 311-313) of the synchronization signal (120),
wherein the at least one logic circuit (1021, 1031) is furthermore configured to send a message (501) via the interface (1022, 1023), wherein the message (501) is indicative of the at least two signal values (301-303, 311-313) of the synchronization signal (120),
**characterized in that** the at least one logic circuit (1021, 1031) is configured to trigger the selection of the at least two signal values (301-303, 311-313) depending on the processing of the message (501) at a predetermined point (650) of a transmission protocol stack (601) of the interface (1022, 1023).

2. Transmission node (102, 103) according to claim 1,
wherein the at least one logic circuit (1021, 1031) is configured to determine the at least two signal values (301-303, 311-313) by sampling the synchronization signal (120) at a predetermined sampling frequency.

3. Transmission node (102, 103) according to claim 2,
wherein the at least one logic circuit (1021, 1031) is configured to sample a continuous series (380) of signal values (301-303, 311-313) of the synchronization signal (120) with the sampling frequency, and to determine the at least two signal values (301-303, 311-313) via selection from the series of signal values (301-303, 311-313).

4. Transmission node (102, 103) according to any one of the preceding claims,
wherein the at least one logic circuit (1021, 1031) is configured to determine a time stamp (400) associated with sending the message (501) based on the at least two signal values (301-303, 311-313).

5. Transmission node (102, 103) according to claim 4, furthermore comprising:
- at least one memory (1023, 1033) which is configured to store predetermined propagation times (202, 203) of signals between transmission nodes (102, 103) of the transmission medium (110),
wherein the at least one logic circuit (1021, 1031) is configured to furthermore determine the time stamp (400) based on the propagation times (202, 203).

6. Transmission node (102, 103) according to claim 5,
wherein the propagation times (202, 203) are not more than three times the period duration (121) of the synchronization signal (120), optionally not more than the period duration (121), furthermore optionally not greater than half the period duration (121).

7. Transmission node (102, 103) according to any one of claims 4 - 6, furthermore comprising:
- at least one memory (1023, 1033) which is configured to store a lookup table (410) between signal values (301-303, 311-313) and time stamps (400),
wherein the at least one logic circuit (1021, 1031) is configured to furthermore determine the time stamp (400) based on the lookup table (410).

8. Transmission node (102, 103) according to any one of the preceding claims,
wherein a duration (350) over which the at least two signal values (301-303, 311-313) are distributed is not greater than 30% of a period duration (121) of the synchronization signal (120), optionally not greater than 10%, furthermore optionally not greater than 4%.

9. Transmission node (102, 103) according to any one of the preceding claims,
wherein the synchronization signal (120) has a frequency which is not greater than 1 MHz, optionally not greater than 500 kHz, furthermore optionally not greater than 1 kHz.

10. Transmission node (102, 103) according to any one of the preceding claims,
wherein the interface (1022, 1023) is configured to communicate the message (501) modulated on a carrier signal,
wherein a frequency of the carrier signal is different than a frequency of the synchronization signal (120).

11. Transmission node (102, 103) according to any one of the preceding claims,
wherein the interface (1022, 1023) is configured to communicate the message (501) in at least one data frame (660) from a series of data frames (660) of a data channel via the transmission medium (110),
wherein a duration of the data frames (660) is not greater than 30% of a period duration (121) of the synchronization signal (120), optionally not greater than 10%, furthermore optionally not greater than 4%.

12. Method comprising:
- receiving a continuous periodic synchronization signal (120) via a transmission medium (110) via an interface (1022, 1023) of a transmission node (102, 103),
- determining at least two chronologically spaced signal values (301-303, 311-313) of the synchronization signal (120) via a logic circuit (1021, 1031) of the transmission node (102, 103), and
- sending a message (501) from the transmission node (102, 103) via the interface (1022, 1023) and via the transmission medium (110), which message (501) is indicative of the at least two signal values (301-303, 311-313) of the synchronization signal (120),
**characterized by**
- triggering a selection of the at least two signal values (301-303, 311-313) depending on the processing of the message (501) at a predetermined point (650) of a transmission protocol stack (601) of the interface (1022, 1023) by the logic circuit (1021, 1031) of the transmission node (102, 103).

## Revendications

1. Nœud de transmission (102, 103), qui comprend :
- une interface (1022, 1023), qui est conçue pour communiquer par le biais d'un milieu de transmission (110), et
- au moins un circuit logique (1021, 1031), qui est conçu pour recevoir un signal de synchronisation (120) périodique continu par le biais de l'interface (1022, 1023) et pour déterminer au moins deux valeurs de signal (301-303, 311 - 313) espacées dans le temps du signal de synchronisation (120),
l'au moins un circuit logique (1021, 1031) étant en outre conçu pour envoyer un message (501) par le biais de l'interface (1022, 1023), le message (501) indiquant les au moins deux valeurs de signal (301-303, 311-313) du signal de synchronisation (120),
**caractérisé en ce que** l'au moins un circuit logique (1021, 1031) est conçu pour déclencher la sélection des au moins deux valeurs de signal (301-303, 311-313) en fonction du traitement du message (501) en un point prédéfini (650) d'une pile de protocole de transmission (601) de l'interface (1022, 1023).

2. Nœud de transmission (102, 103) selon la revendication 1,
dans lequel l'au moins un circuit logique (1021, 1031) est conçu pour déterminer les au moins deux valeurs de signal (301-303, 311-313) par échantillonnage du signal de synchronisation (120) à une fréquence d'échantillonnage préétablie.

3. Nœud de transmission (102, 103) selon la revendication 2,
dans lequel l'au moins un circuit logique (1021, 1031) est conçu pour échantillonner une série (380) continue de valeurs de signal (301-303, 311-313) du signal de synchronisation (120) à la fréquence d'échantillonnage et pour déterminer les au moins deux valeurs de signal (301-303, 311-313) par une sélection dans la série de valeurs de signal (301-303, 311-313).

4. Nœud de transmission (102, 103) selon l'une quelconque des revendications précédentes,
dans lequel l'au moins un circuit logique (1021, 1031) est conçu pour déterminer un horodatage (400) associé à l'envoi du message (501) sur la base des au moins deux valeurs de signal (301-303, 311-313).

5. Nœud de transmission (102, 103) selon la revendication 4, comprenant en outre :
- au moins une mémoire (1023, 1033), qui est conçue pour enregistrer des temps de propagation (202, 203) prédéfinis de signaux entre des nœuds de transmission (102, 103) du milieu de transmission (110),
l'au moins un circuit logique (1021, 1031) étant conçu pour déterminer l'horodatage (400) en outre sur la base des temps de propagation (202, 203).

6. Nœud de transmission (102, 103) selon la revendication 5,
dans lequel les temps de propagation (202, 203) ne sont pas supérieurs au triple de la durée de période (121) du signal de synchronisation (120), de manière facultative ne sont pas supérieurs à la durée de période (121), en outre de manière facultative ne sont pas supérieurs à la moitié de la durée de période (121).

7. Nœud de transmission (102, 103) selon l'une des revendications 4 à 6, comprenant en outre :
- au moins une mémoire (1023, 1033), qui est conçue pour enregistrer une table de correspondance (410) entre des valeurs de signal (301-303, 311-313) et des horodatages (400),
l'au moins un circuit logique (1021, 1031) étant conçu pour déterminer l'horodatage (400) en outre sur la base de la table de correspondance (410).

8. Nœud de transmission (102, 103) selon l'une quelconque des revendications précédentes,
dans lequel une durée (350), sur laquelle les au moins deux valeurs de signal (301-303, 311-313) sont réparties, n'est pas supérieure à 30 %, de manière facultative pas supérieure à 10 %, en outre de manière facultative pas supérieure à 4 %, d'une durée de période (121) du signal de synchronisation (120).

9. Nœud de transmission (102, 103) selon l'une quelconque des revendications précédentes,
dans lequel le signal de synchronisation (120) présente une fréquence qui n'est pas supérieure à 1 MHz, de manière facultative pas supérieure à 500 kHz, en outre de manière facultative pas supérieure à 1 kHz.

10. Nœud de transmission (102, 103) selon l'une quelconque des revendications précédentes,
dans lequel l'interface (1022, 1023) est conçue pour communiquer le message (501) de manière modulée sur un signal porteur,
une fréquence du signal porteur étant différente d'une fréquence du signal de synchronisation (120).

11. Nœud de transmission (102, 103) selon l'une quelconque des revendications précédentes,
dans lequel l'interface (1022, 1023) est conçue pour communiquer le message (501) dans au moins une trame de données (660) parmi une série de trames de données (660) d'un canal de données par le biais du milieu de transmission (110),
une durée des trames de données (660) n'étant pas supérieure à 30 %, de manière facultative pas supérieure à 10 %, en outre de manière facultative pas supérieure à 4 %, d'une durée de période (121) du signal de synchronisation (120).

12. Procédé, comprenant :
- la réception d'un signal de synchronisation (120) périodique continu par le biais d'un milieu de transmission (110) par le biais d'une interface (1022, 1023) d'un nœud de transmission (102, 103),
- la détermination d'au moins deux valeurs de signal (301-303, 311-313) espacées dans le temps du signal de synchronisation (120) par un circuit logique (1021, 1031) du nœud de transmission (102, 103), et
- l'envoi d'un message (501) par le nœud de transmission (102, 103) par le biais de l'interface (1022, 1023) et par le biais du milieu de transmission (110), qui indique les au moins deux valeurs de signal (301-303, 311-313) du signal de synchronisation (120),
**caractérisé par**
- le déclenchement d'une sélection des au moins deux valeurs de signal (301-303, 311-313) en fonction du traitement du message (501) en un point prédéfini (650) d'une pile de protocole de transmission (601) de l'interface (1022, 1023) par le circuit logique (1021, 1031) du nœud de transmission (102, 103).
